# EUROPEAN PATENT APPLICATION

(11) **EP 3 632 632 A1**
(43) Date of publication of application: **08.04.2020**
(21) Application number: 18806142.8
(22) Date of filing: 24.05.2018
(51) Int. Cl.: B25J 18/02, B25J 17/02, B64G 1/64

(54) **ROBOT SYSTEM AND GRASPING SYSTEM**

(30) Priority: 26.05.2017 JP 2017104821
(71) Applicant: Japan Aerospace Exploration Agency, Tokyo 182-8522 (JP)
(72) Inventor: TANISHIMA Nobutaka, Chofu-shi Tokyo 182-8522 (JP); HIRANO Daichi, Chofu-shi Tokyo 182-8522 (JP); TSUMAKI Toshimichi, Chofu-shi Tokyo 182-8522 (JP)
(74) Representative: Maiwald Patent- und Rechtsanwaltsgesellschaft mbH
(86) International application number: PCT/JP2018/019968
(87) International publication number: WO 2018/216761

(57) **Abstract**

A robot including an extendable device capable of extending and contracting in at least one direction, at least two end effectors that are respectively connected to at least two end portions of the extendable device, and a control unit capable of causing the extendable device to extend and contract, wherein each of the at least two end effectors includes at least one grasping unit that extends outward, and the robot is operable to grasp a target by the at least two end effectors by the control unit causing the extendable device to extend or contract.

## Description

### [Field of the Invention]

The invention relates to a robot and a grasping system.

### [Background of the Invention]

In recent years, the need for removal of space debris has been increasing more and more. Space debris with particularly high removal priority are the upper stage units of launch vehicles, and the upper stage units of launch vehicles have various shapes and dimensions of diameters according to the standards of respective countries although rough shapes of the upper stage units which are cylindrical are equal. In order to remove the rockets that have become space debris, it is necessary to capture the rockets. A PAR (Payload Adapter Ring) that connects a rocket and a satellite is the most predominant as a grasping connection unit for rocket capture for the reason that the PAR is accessible and always present on each rocket. Further, a nozzle of a rocket is also predominant as the grasping connection unit for rocket capture.

Meanwhile, the launched satellite side also has a PAR having the same diameter as the PAR of the rocket. Even in maintenance service or the like of a broken satellite, grasping connection of a PAR is needed.

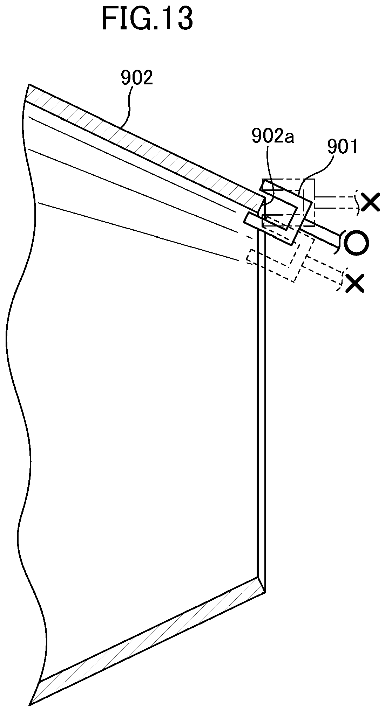

In this respect, as the technique for grasping a PAR, there is an MDA method as shown in Non Patent Literature 1 described below. This is a method in which a hand 901 pinches a cylinder end portion 902a of a PAR 902 (refer to Figure 13).

Further, as the technique for grasping a nozzle, there is a technique of grasping a thruster for satellite attitude control with three claws from outside as shown in Non Patent Literature 2 described below.

### [Citation List]

### [Non Patent Literature]

Non Patent Literature 1: John Ratti et al, "Spacecraft Robotic Capture Tool", i-SAIRAS 2014, 2014
Non Patent Literature 2: Haidong Hu, et al., "A Vision System for Autonomous Satellite Grapple with Attitude Thruster", ICINCO 2014, 2014, pp. 333-337

### [Summary of Invention]

### [Problem to be solved by the invention]

However, in the MDA method as shown in Non Patent Literature 1, as illustrated in Figure 13, in the case where a positional error or an attitude error occurs, there is a high probability of causing a grasping failure, and flicking off a space debris.

Further, in the technique as shown in Non Patent Literature 2, the grasping mechanism needs to have a width of a size of a grasping target part or more. The grasping mechanism becomes huge for a large grasping target part like a nozzle of a rocket instead of a small grasping target part like a thruster which is handled by Non Patent Literature 2.

Thus, the present invention has an object to provide a small robot and a grasping system that are excellent in robustness with respect to a position error and an attitude error of the robot with versatility even for grasping targets having different shapes and dimensions of diameters.

### [Means for solving problem]

One aspect of the present invention provides a robot including an extendable device capable of extending and contracting in at least one direction, at least two end effectors that are respectively connected to at least two end portions of the extendable device, and a control unit capable of causing the extendable device to extend and contract, wherein each of the at least two end effectors includes at least one grasping unit that extends outward, and the robot is operable to grasp a target by the at least two end effectors by the control unit causing the extendable device to extend or contract.

The end effectors may be rotatably connected to at least two end portions of the extendable device to bend to a direction in which the extendable device extends and contracts, and the robot is operable to grasp the target by the at least two end effectors by the control unit causing to extend the extendable device and rotate the end effectors, or to extend the extendable device, rotate the end effectors, and contract the extendable device.

The extendable device is capable of extending and contracting in at least two directions, and may include a first to an n^{th} (n is an integer of two or more) extendable arms that are respectively capable of extending and contracting in a first to an n^{th} directions different from each other.

The extendable device may further include a first to an n^{th} base units, each of the first to n^{th} base units may include a first drive unit, and the first to the n^{th} extendable arms may respectively have base end portions connected to the first to the n^{th} base units, and extend and contract along the first to n^{th} directions by power from the first drive unit.

The first to n^{th} extendable arms may respectively include a plurality of movable bodies that advance and retract along an axial direction with them interlocked with each other.

The end effector is rotatable with respect to the extendable arms by power from a second drive unit provided at the base units.

At least one of the plurality of movable bodies may include a frame, a base end side pulley that is rotatably provided at the frame, and rotates by the frame moving, a tip end side pulley that is rotatably provided at the frame, and a first transmission member that is provided in a tense state between the base end side pulley and the tip end side pulley, and transmits rotation of the base end side pulley to the tip end side pulley, wherein the first transmission member may be fixed to a movable body adjacent to a tip end side.

Each of the base units may include a base frame, the first drive unit may include a first motor, a first motor pulley that is directly connected to a rotation shaft of the first motor, and rotatably provided at the base frame of the base unit, a first driven pulley that is rotatably provided at the base frame, and a second transmission member that is provided in a tension state between the first motor pulley and the first driven pulley, and transmits rotation of the first motor to the first driven pulley, the second transmission member being fixed to the movable body adjacent to a tip end side.

The first transmission member may include a third wire in which one end of the third wire is wound on the base end side pulley, and the other end of the third wire is wound on the tip end side pulley respectively from a first side, and a fourth wire in which one end of the fourth wire is wound on the base end side pulley, and the other end of the fourth wire is wound on the tip end side pulley respectively from a second side.

The end effector may be connected to the second drive unit by a second transmission member through pulleys that are provided on at least one of the base units and the plurality of movable bodies, and the second transmission member may be laid on an opposite side to the end effector, of at least one of the pulleys provided on at least one of the base units and the plurality of movable bodies, and a length of the second transmission member may be configured to be constant regardless of an extension or contraction state of the first to the n^{th} extendable arms.

Another aspect of the present invention provides a grasping system including the robot, and a grasping control device that positions the robot to a grasping target part included by a grasping target, and instructs extension or contraction of the extendable device to the control unit so as to grasp the grasping target part.

The grasping control device may instruct extension of the extendable device and rotation of the end effector to the control unit.

The grasping control device may instruct extension of the extendable device, rotation of the end effector, and contraction of the extendable device to the control unit.

The grasping control device may determine whether or not the grasping system succeeds in grasping the grasping target, and when it is determined that the grasping system does not succeed in grasping of the grasping target, the grasping control device may contract or extend the extendable device in accordance with a shape of the grasping target part.

A shape of the grasping target part may be a tapered cylindrical shape or an inversely tapered cylindrical shape.

The grasping target may be a space debris, and the grasping target part may be a PAR or a nozzle.

### [Effect of the Invention]

According to the present invention having the above described configuration, the compact robot and grasping system are provided which are excellent in robustness with respect to a position error and an attitude error of the robot with versatility even for grasping targets having different shapes and dimensions of diameters.

### [Brief Description of the Drawings]

[Figure 1] Figure 1 is an overall configuration diagram of a grasping system according to an embodiment of the present invention.
[Figure 2] Figure 2 is a perspective view (contraction state) of a robot according to the embodiment of the present invention.
[Figure 3] Figure 3 is a partial perspective view (extension state) seen from a tip end side of the robot according to the embodiment of the present invention.
[Figure 4] Figure 4 is a partial perspective view (extension state) seen from a base end side of the robot according to the embodiment of the present invention.
[Figure 5] Figure 5 is a front view (extension state) of the robot according to the embodiment of the present invention.
[Figure 6] Figure 6 is a partial front view (extension state) of the robot according to the embodiment of the present invention.
[Figure 7] Figure 7 is a sectional view taken along line VII-VII (extension state) in Figure 6.
[Figure 8] Figure 8 is a view illustrating a principle of a rotation transmission mechanism by wire.
[Figure 9] Figure 9 is a diagram illustrating a principle that a length of a fifth wire 35 becomes a constant length regardless of an extension/contraction state of a first extendable arm 40.
[Figure 10] Figure 10 is a diagram illustrating an operation of a removal satellite disposing a robot on a PAR of a space debris.
[Figure 11] Figure 11 is a diagram illustrating a grasping operation to the PAR.
[Figure 12] Figure 12 is a diagram illustrating a grasping operation to a nozzle.
[Figure 13] Figure 13 is a diagram illustrating grasping according to a conventional MDA method.

### [Description of Embodiment]

Hereinafter, an embodiment of the present invention will be described with reference to the drawings.

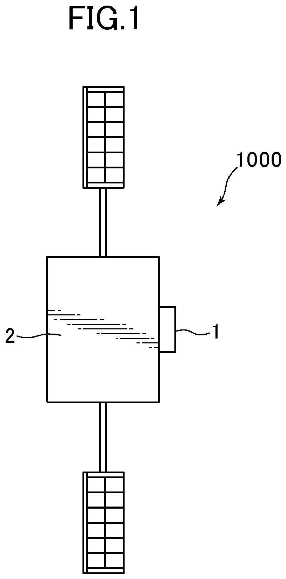

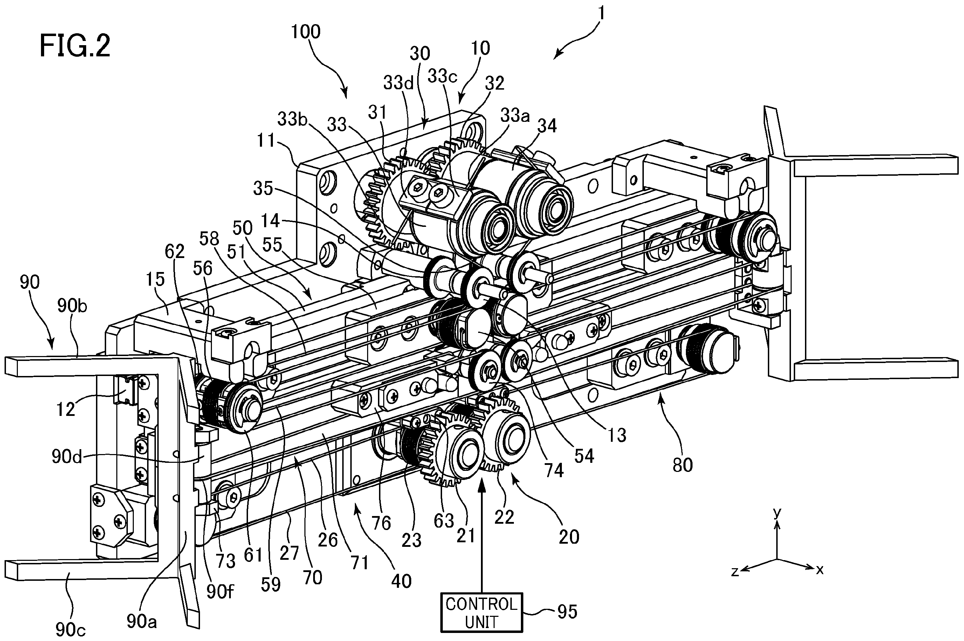

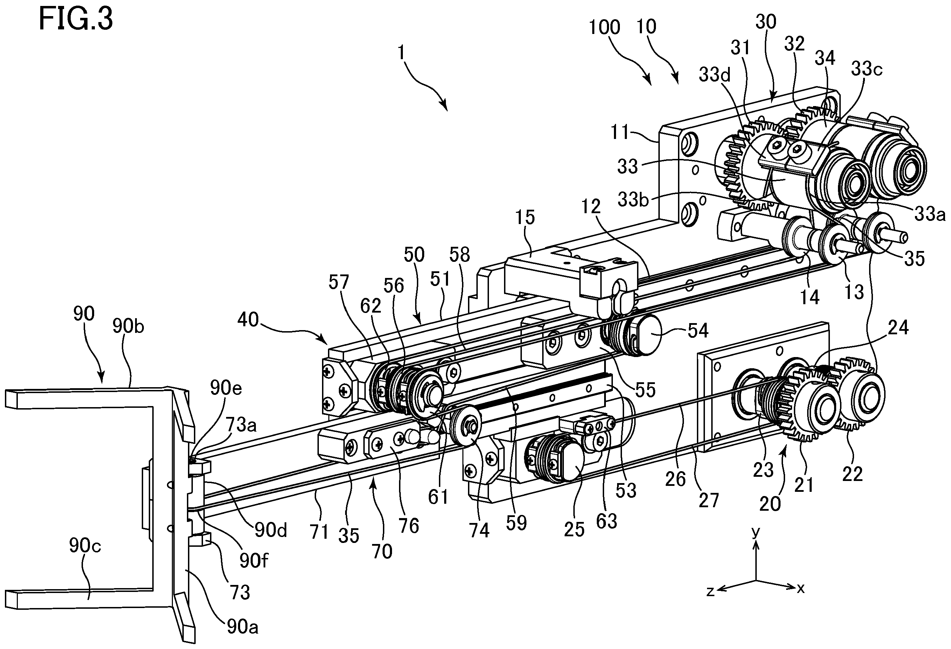

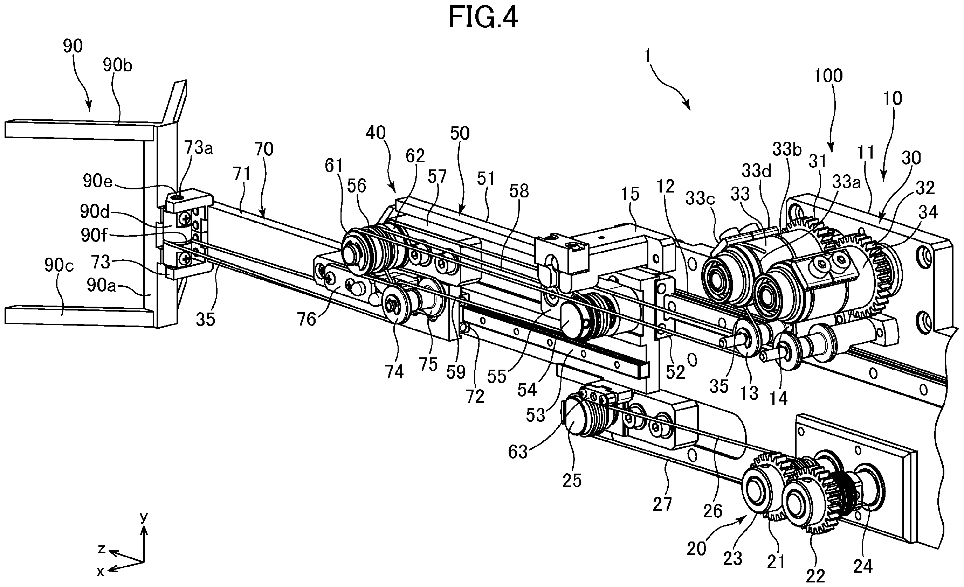

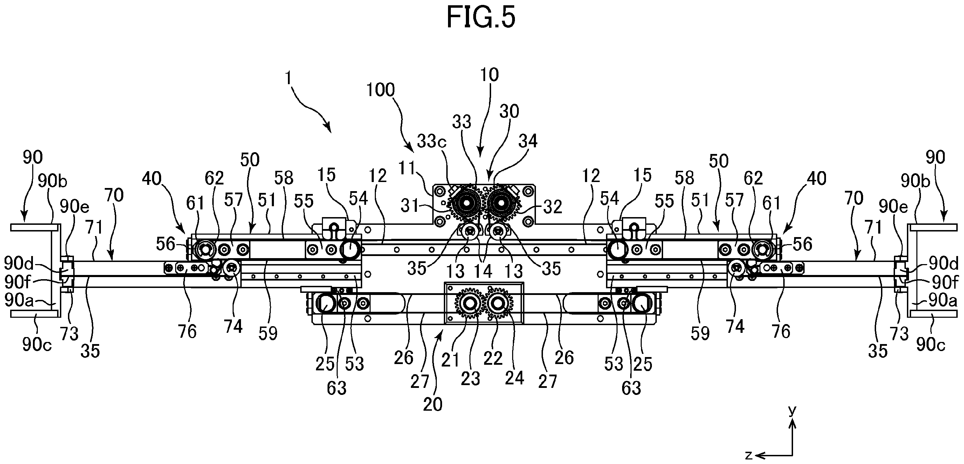

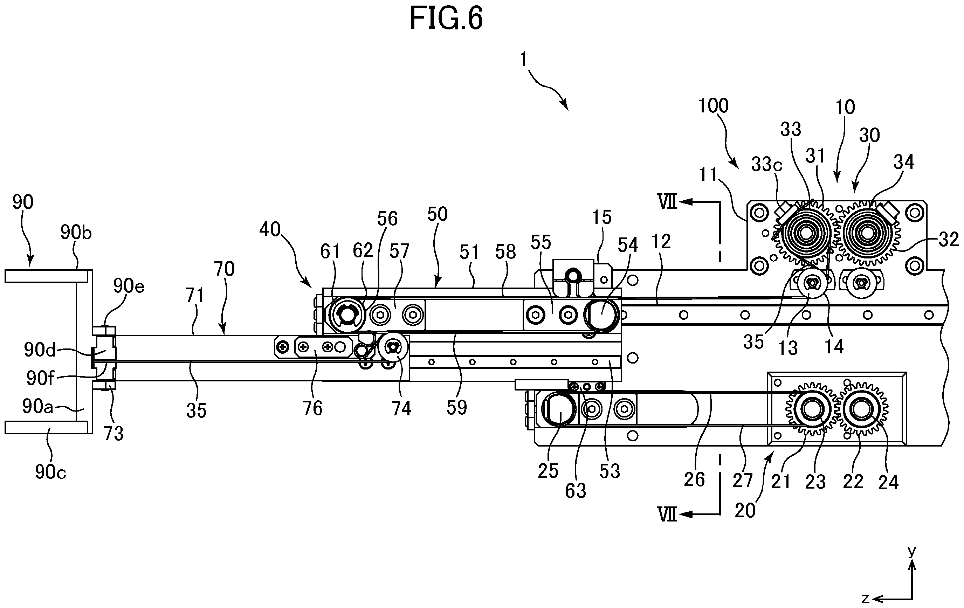

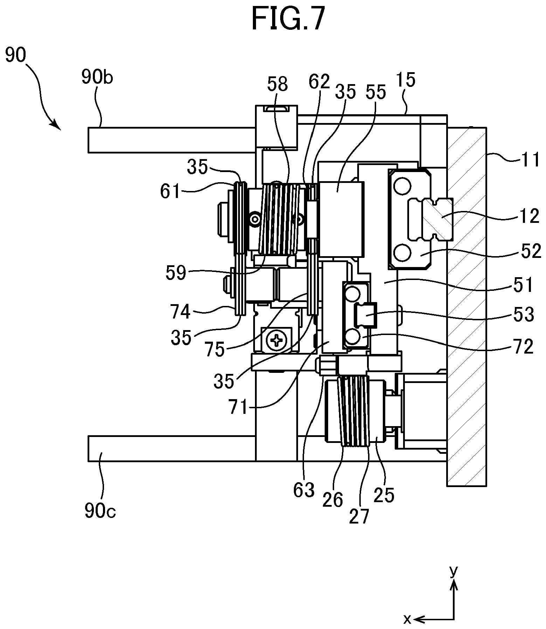

Figure 1 is an overall configuration diagram of a grasping system according to the embodiment of the present invention. Figure 2 is a perspective view (contraction state) of a robot according to the embodiment of the present invention. Figure 3 is a partial perspective view (extension state) seen from a tip end side of the robot according to the embodiment of the present invention. Figure 4 is a partial perspective view (extension state) seen from a base end side of the robot according to the embodiment of the present invention. Figure 5 is a front view (extension state) of the robot according to the embodiment of the present invention. Figure 6 is a partial front view (extension state) of the robot according to the embodiment of the present invention. Figure 7 is a sectional view taken along line VII-VII in Figure 6 (extension state).

A grasping system 1000 includes a robot 1 and a removal satellite 2 that is a grasping control device. The removal satellite 2 instructs extension and contraction of an extendable device 100, and rotation of an end effector 90 to a control unit 95 so as to grasp a PAR 401 or a nozzle 402 of a space debris 400, which is a grasping target part, and determines a success and a failure of grasping, as will be described later. The robot 1 is connected to a tip end of an extension spring 3 which is contained in the removal satellite 2.

The robot 1 includes the extendable device 100, the end effector 90, and the control unit 95.

The extendable device 100 includes a base unit 10, a first extendable arm 40, and a second extendable arm 80.

The base unit 10 includes a base frame 11, a first drive unit 20, and a second drive unit 30. In the present embodiment, a base unit for the first extendable arm 40 and a base unit for the second extendable arm 80 are formed as the common base unit 10.

The base frame 11 is formed in a rectangular plate shape. The first drive unit 20 and the second drive unit 30 are mounted to the base frame 11.

The first drive unit 20 includes a first motor (not illustrated), a first drive gear 21, a first driven gear 22, a first motor pulley 23, a first drive pulley 24, a first driven pulley 25, a first wire 26, and a second wire 27.

To a rotation shaft of the first motor, the first drive gear 21 and the first motor pulley 23 are directly connected. The first wire 26 and the second wire 27 which are a second transmission member are provided in a tense state on the first motor pulley 23 and the first driven pulley 25, and a rotational force of the first motor is transmitted to the first driven pulley 25 through the first motor pulley 23, the first wire 26 and the second wire 27 to rotate the first driven pulley 25. Hereinafter, this point will be described in detail.

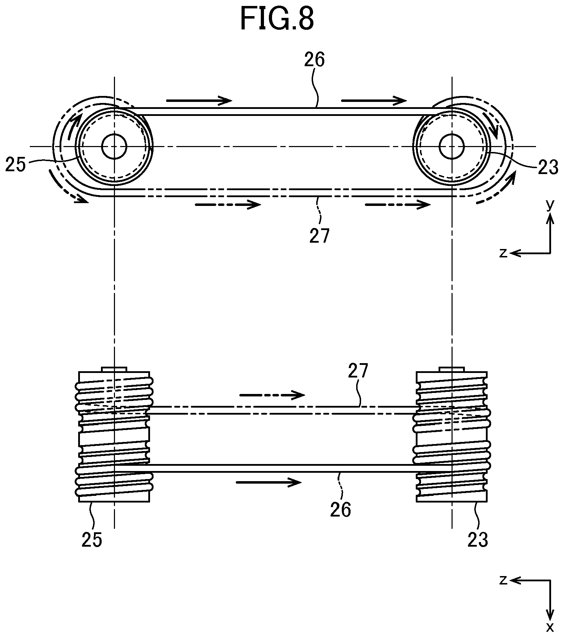

Figure 8 is a view illustrating a principle of a rotation transmission mechanism by wire. Note that in an upper view of Figure 8, the second wire 27 is described as separating from the first motor pulley 23 and the first driven pulley 25 to facilitate understanding, but the second wire 27 is actually wound around the first motor pulley 23 and the first driven pulley 25 as in a lower drawing in Figure 8 and as described later. When one side with respect to a line that connects a center of rotation of the first motor pulley 23 and a center of rotation of the first driven pulley 25 is referred to as a first side, and the other side with respect to the line that connects the center of rotation of the first motor pulley 23 and the center of rotation of the first driven pulley 25 is referred to as a second side, one end of the first wire 26 is wound on the first motor pulley 23, whereas the other end is wound on the first driven pulley 25 from an upper side that is the first side, and the one and other ends are respectively fixed by fixing members. One end of the second wire 27 is wound on the first motor pulley 23, whereas the other end is wound on the first driven pulley 25, from a lower side that is the second side, and the one and other ends are respectively fixed by fixing members.

When the first motor pulley 23 is rotated clockwise in such configuration, a portion of the first wire 26 which is between the pulleys is moved in a -z direction, and thereby the first driven pulley 25 rotates clockwise. On the other hand, when the first motor pulley 23 is rotated counterclockwise, a portion of the second wire 27 which is between the pulleys is moved in the -z direction, and thereby the first driven pulley 25 rotates counterclockwise. Note that in a state where the first extendable arm 40 is completely contracted, the first wire 26 of a substantially same length as a length between the pulleys is wound on the first motor pulley 23, and the second wire 27 of a substantially same length as the length between the pulleys is wound on the first driven pulley 25. On the other hand, in a state where the first extendable arm 40 is completely extended, the second wire 27 of the substantially same length as the length between the pulleys is wound on the first motor pulley 23, and the first wire 26 of the substantially same length as the length between the pulleys is wound on the first driven pulley 25. In order to prevent an error of the length of the wires which are wound, grooves for passing the wire are provided in the respective pulleys to be adjacent to one another, so that the wires are not laid on each other.

Consequently, according to such configuration, the first driven pulley 25 can be rotated in both directions in response to a rotation direction of the first motor pulley 23. Note that when the first driven pulley 25 is a drive pulley, and the first motor pulley 23 is a driven pulley, rotation in both the directions is enabled based on the same principle.

According to such configuration, the transmission mechanism can be realized without using a belt that is difficult to use in a cosmic space exposed to radiation or the like, but the transmission member is not limited to this, and any suitable transmission member such as a belt may be used.

A long first guide projection 12 that extends in a longitudinal direction (+z direction) of the base frame 11 is mounted to the base frame 11.

Further, to the base frame 11, pulleys 13 and 14 for winding a fifth wire 35 for rotation control of an end effector 90 described later are rotatably mounted.

The first extendable arm 40 includes a first movable body 50 and a second movable body 70 that are interlocked with each other and advance and retract along the first direction (+z direction).

The first movable body 50 includes a first frame 51, a first guide groove portion 52, a second guide projection 53, a base end side pulley 54, a base end side pulley support unit 55, a tip end side pulley 56, a tip end side pulley support unit 57, a third wire 58, and a fourth wire 59.

The first frame 51 is formed in a rectangular plate shape, and the long first guide groove portion 52 that extends in the first direction (+z direction) is mounted to an upper side of a surface that faces a base unit, of the first frame 51. The first guide groove portion 52 receives the first guide projection 12, and holds the first guide projection 12. By engaging the base unit 10 and the first movable body 50 with each other via the guide mechanism (the guide groove portion, the guide projection), the first movable body 50 can be moved in the first direction (+z direction) with respect to the base unit 10.

Further, at a lower side of a surface at opposite side to the surface where the first guide groove portion 52 is mounted, of the first frame 51, the long second guide projection 53 that extends in the first direction (+z direction) is mounted.

The base end side pulley support unit 55 and the tip end side pulley support unit 57 are mounted at a predetermined space in a longitudinal direction (first direction) in the first frame 51. By the base end side pulley support unit 55 and the tip end side pulley support unit 57, the base end side pulley 54 and the tip end side pulley 56 are respectively rotatably supported. In other words, the base end side pulley 54 and the tip end side pulley 56 are mounted at the predetermined space in the longitudinal direction (first direction) in the first frame 51. As in the first drive unit 20, the third wire 58 and the fourth wire 59 which are the first transmission member are provided in a tense state on the base end side pulley 54 and the tip end side pulley 56. In other words, one end of the third wire 58 is wound on and fixed to the base end side pulley 54, whereas the other end is wound on and fixed to the tip end side pulley 56 from the upper side (first side), and one end of the fourth wire 59 is wound on and fixed to the base end side pulley, whereas the other end is wound on and fixed to the tip end side pulley 56 from the lower side (second side). By such configuration, the base end side pulley 54 and the tip end side pulley 56 can be rotated together in both clockwise and counterclockwise directions.

Further, to a rotation shaft of the tip end side pulley 56, pulleys 61 and 62 for winding wires for rotation control of the end effector 90 described later are rotatably mounted.

The second movable body 70 includes a second frame 71, a second guide groove portion 72, an end effector support unit 73, and pulleys 74 and 75.

The second frame 71 is formed in a rectangular plate shape, and the long second guide groove portion 72 that extends in the first direction (+z direction) is mounted to a surface facing the first frame 51, of the second frame 71. The second guide groove portion 72 receives the second guide projection 53, and holds the second guide projection 53. The first movable body 50 and the second movable body 70 are engaged with each other via the guide mechanism (the guide groove portion, the guide projection unit), and thereby the second movable body 70 can be moved in the first direction (+z direction) with respect to the first movable body 50.

The bracket-shaped end effector support unit 73 that rotatably supports the end effector 90 is provided at a tip end portion of the second frame 71.

Further, the pulleys 74 and 75 for winding a fifth wire for rotation control of the end effector 90 described later are rotatably mounted to the second frame 71.

Between the first motor pulley 23 and the first driven pulley 25, the first wire 26 and the first frame 51 are fixed via a second fixing member 63. Further, between the base end side pulley 54 and the tip end side pulley 56, the third wire 58 and the base frame 11 are fixed via an L-shaped first fixing member 15. Further, between the base end side pulley 54 and the tip end side pulley 56, the fourth wire 59 and the second frame 71 are fixed via a third fixing member 76.

The end effector 90 includes grasping units 90b and 90c that extend in V-shapes outward in planes perpendicular to a longitudinal direction of a base unit 90a in both ends of the long base unit 90a, and a cylindrical shaft support unit 90d that is mounted to a center of the base unit. At both ends in the longitudinal direction of the shaft support unit 90d, protrusions 90e are formed, the protrusions 90e are rotatably fitted in bores 73a provided in the end effector support unit 73, and the end effector 90 is supported so that a longitudinal direction of the shaft support unit 90d is in a direction parallel with a principal plane of the second frame 71 and perpendicular to a direction in which the first extendable arm 40 extends and contracts. In other words, the end effector 90 is rotatably connected to a tip end portion of the first extendable arm with a direction parallel with the principal plane of the second frame 71 and perpendicular to the direction in which the first extendable arm 40 extends and contracts as an axis. A groove 90f for laying the fifth wire is provided in a circumferential direction, in a center in the longitudinal direction of the shaft support unit 90d. The configuration of connection of the end effector to the extendable arm is not limited to the above described configuration, but may be any suitable configuration as long as the configuration is such that the end effector is rotatably connected to the end portion of the extendable arm in such a manner as to be folded to a direction in which the extendable arm extends and contracts.

Here, since the grasping units 90b and 90c are disposed with a predetermined space left, the grasping units 90b and 90c can grasp a grasping target stably at a time of grasping the grasping target. A shape of the grasping unit may be any suitable shape such as a U-shape, and a γ shape as long as the shape of the grasping unit extends outward.

The second drive unit 30 includes a second motor (not illustrated), a second drive gear 31, a second driven gear 32, a second motor pulley 33, and a second drive pulley 34.

To a rotation shaft of the second motor, the second drive gear 31, and the second motor pulley 33 are directly connected.

In the second motor pulley 33, two grooves 33a and 33b are formed in a circumferential direction. One end of a fifth wire 35 is fixed to the second motor pulley 33 by a fixing member 33c, and is led out from an end effector 90 side, the fifth wire 35 is laid on the groove 33a of the second motor pulley 33, the pulley 13 which is mounted to the base unit 10, the pulley 13 which is mounted to the rotation shaft of the tip end side pulley 56, the pulley 74 which is mounted to the second frame 71, the groove 90f of the shaft support unit 90d of the end effector 90, the pulley 75 which is mounted to the second frame 71, the pulley 14 which is mounted to the rotation shaft of the tip end side pulley 56, the pulley 14 which is mounted to the base unit 10, and the groove 33b of the second motor pulley 33 in this order, and the other end of the fifth wire 35 is fixed to the second motor pulley 33 by a fixing member 33d from a second drive pulley 34 side. According to such configuration, the control unit 95 may control a rotation angle of the end effector 90 by controlling a rotation angle of the second motor.

In such configuration, a length of the fifth wire 35 is constant regardless of an extension/contraction state of the first extendable arm 40. Hereinafter, this point will be described in detail.

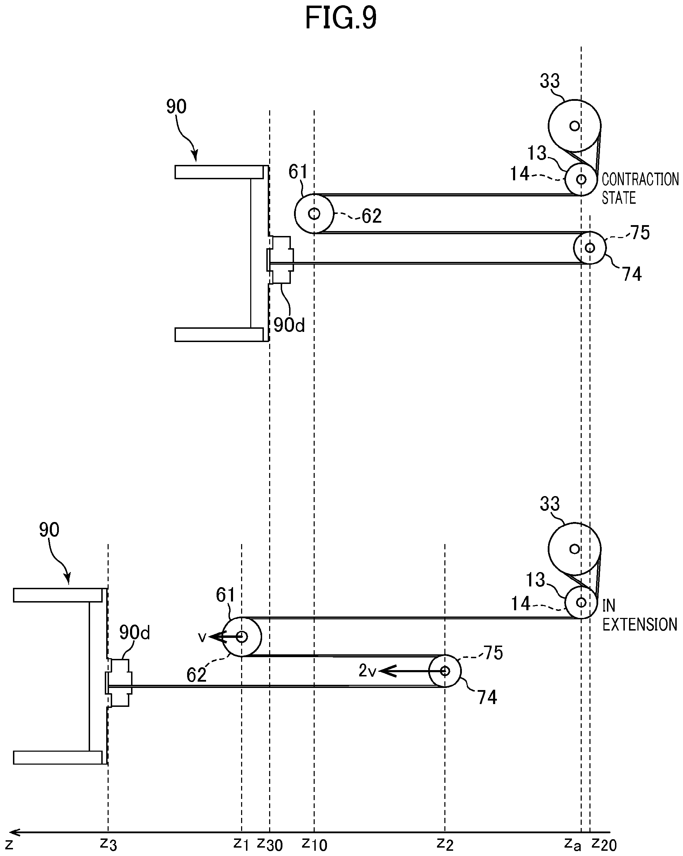

Figure 9 is a diagram illustrating a principle that the length of the fifth wire 35 is constant regardless of the extension/contraction state of the first extendable arm 40. When L is the length of the fifth wire 35, L₁ is a length from the fixing member 33c to a lower end of the pulley 13, L₂ is a length half a circumference of the pulley 61, L₃ is a length half a circumference of the pulley 74, L₄ is a length from a lower end of the pulley 14 to the fixing member 33d, zₐ is a z coordinate of a center of the pulley 13, z₁ is a z coordinate of a center of the pulley 61, z₁₀ is a z coordinate of the center of the pulley 61 at a time of the first extendable arm 40 being in a contraction state (initial state), z₂ is a z coordinate of a center of the pulley 74, z₂₀ is a z coordinate of the center of the pulley 74 at a time of the first extendable arm 40 being in the contraction state, z₃ is a z coordinate of the shaft support unit 90d of the end effector 90, and z₃₀ is a z coordinate of the shaft support unit 90d of the end effector 90, L=L₁+2{(z₁-zₐ)+L₂+(z₁-z₂)+L₃+(z₃-z₂)}+L₄ is established.

Further, since a distance between the shaft support unit 90d of the end effector 90 and the pulley 74 is constant, z₃-z₂=z₃₀-z₂₀ is established.

As described later, a moving velocity of the pulley 74 is twice as high as a moving velocity v of the pulley 61, so that a moving distance of the pulley 74 is twice as large as a moving distance of the pulley 61, and z₂-z₂₀=2(z₁-z₁₀) is established.

Therefore, from the above equations, L=2{(z₁₀-zₐ)+(z₁₀-z₂₀)+(z₃₀-z₂₀)}+L₁+L₂+L₃+L₄ is established, and it is found that the length of the fifth wire 35 is constant regardless of the extension/contraction state of the first extendable arm 40.

Accordingly, drive units of the respective end effectors may be disposed at the base end side of the respective extendable arms, that is, a center portion of the robot 1, instead of the tip end sides of the respective extendable arms. Consequently, an inertial moment of the entire robot 1 can be decreased. Further, since the drive units of the respective end effectors can be disposed at the base end side of the respective extendable arms, the respective end effectors can be driven by the one common drive unit, and the number of actuators can be decreased.

Here, the configuration in which the length of the fifth wire is made constant regardless of the extension or contraction state of the extendable arm is not limited to the above described configuration, but may be any suitable configuration. That is, the end effector may be connected to the second drive unit by the fifth wire through the pulleys that are provided on at least one of the base unit and a plurality of movable bodies, the fifth wire may be laid on the opposite side to the end effector, of at least one of the pulleys provided on at least one of the base unit and the plurality of movable bodies (in the above described configuration, the fifth wire 35 is laid on the right side of the pulley 74), and thereby, a portion of the wire (portion of the wire between the pulley 61 and the pulley 74 in the above described configuration) that can be fed out when the extendable arm extends may be prepared. Accordingly, such configuration can be implemented by moving the pulley with the fifth wire laid on the opposite side to the end effector so that the length of the fifth wire is constant regardless of the extension/contraction state of the extendable arm, and configuring other elements in accordance with necessity.

The second extendable arm 80 has a similar configuration to the first extendable arm 40. Rotation of the first motor is transmitted to the first drive pulley 24 as rotation in an opposite direction through the first drive gear 21 and the first driven gear 22. Further, rotation of the second motor is transmitted to the second drive pulley 34 as rotation in an opposite direction through the second drive gear 31 and the second driven gear 32.

The control unit 95 receives an instruction from inside or outside of the robot, and controls the rotations of the first motor and the second motor.

### (Operation)

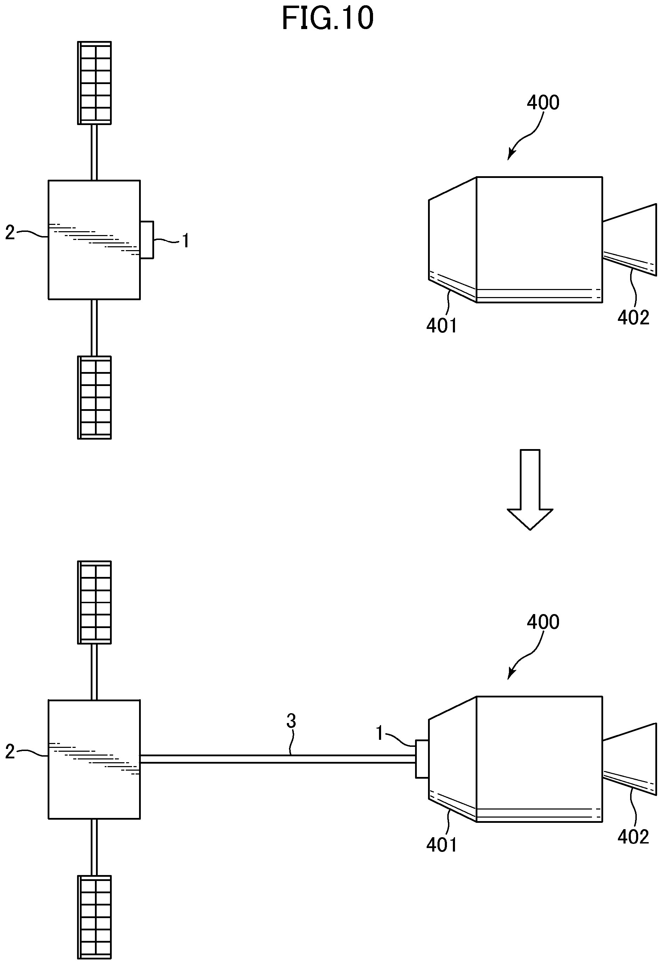

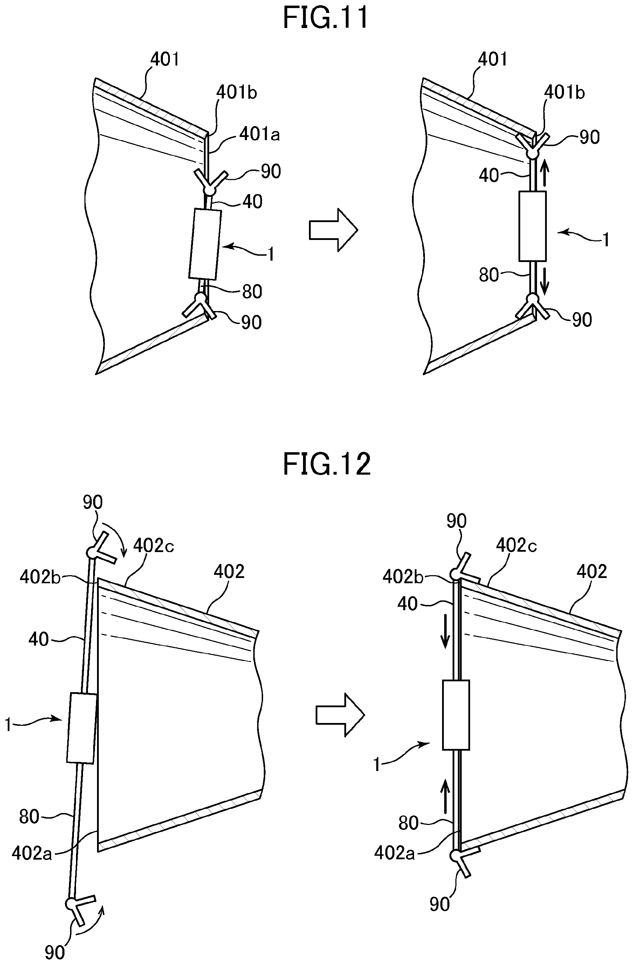

Based on the above system configuration, operations of the robot and the grasping system according to one embodiment of the present invention will be described. Figure 10 is a diagram illustrating an operation of a removal satellite disposing the robot on a PAR of a space debris. Figure 11 is a diagram illustrating a grasping operation to the PAR. Figure 12 is a diagram illustrating a grasping operation to a nozzle.

The removal satellite 2 including the robot 1 approaches the space debris 400 while carrying out relative position measurement to the space debris 400. Finally, the removal satellite 2 moves to a region corresponding to an extension length of the extension spring 3 so that the robot 1 faces the PAR 401 or the nozzle 402 of the space debris 400, and extends the extension spring 3 having the robot 1 connected to a tip end (Figure 10). Such method for disposing the removal device included by the removal satellite for the purpose of removing the space debris in a vicinity of the space debris is known as disclosed in Japanese Patent Laid-Open No. 2014-226974, for example, and therefore detailed explanation is omitted.

Subsequently, the removal satellite 2 starts a grasping operation of the robot 1. First, a case of performing a grasping operation to the PAR 401 having a tapered cylindrical shape will described.

The removal satellite 2 changes the position and attitude by a propulsive device included by the removal satellite 2, and thereby the robot 1 which is connected to the removal satellite 2 through the extension spring 3 is positioned to an opening surface 401a of the PAR 401 which is a grasping target part.

Subsequently, based on an instruction to the control unit 95 from the removal satellite 2, the first extendable arm 40 and the second extendable arm 80 are extended. Specifically, this is as follows.

By the control unit 95, the rotation shaft of the first motor is rotated counterclockwise. Thereby, the power from the first motor is transmitted to the first driven pulley 25 through the first motor pulley 23, the first wire 26 and the second wire 27, and the first driven pulley 25 rotates counterclockwise. At this time, the first wire 26 moves at the velocity v in the first direction (+z direction), that is, from the base end side to the tip end side, and with this, the first frame 51 which is fixed to the first wire 26 by the second fixing member 63 also moves in the first direction (+ z direction) at the velocity v.

The first frame 51 moves in the first direction (+z direction), and thereby the third wire 58 which is fixed to the base unit 10 by the first fixing member 15 moves in an opposite direction (-z direction) to the first direction, whereby the base end side pulley 54 and the tip end side pulley 56 rotate clockwise. At this time, the third wire 58 moves in the -z direction at the relative velocity v with respect to the first frame 51 which moves in the +z direction at the velocity v, and therefore moves in the +z direction at a velocity 2v.

The base end side pulley 54 and the tip end side pulley 56 rotate clockwise, and therefore, the fourth wire 59 moves in the first direction (+z direction) at the velocity 2v. Thereby, the second frame 71 which is fixed to the fourth wire 59 by the third fixing member 76 and the end effector 90 which is mounted to the second frame 71 move in the first direction (+z direction) at the velocity 2v.

By the control unit 95, the rotation shaft of the first motor is rotated counterclockwise, but the first drive pulley 24 rotates clockwise through the first drive gear 21 and the first driven gear 22. Thereby, the second extendable arm 80 having the similar configuration as the first extendable arm 40 extends symmetrically to the first extendable arm 40 in the second direction (-z direction) by the similar operation to what is described above. When the rotation shaft of the second motor is rotated by the control unit 95, the second drive pulley 34 rotates in an opposite direction through the second drive gear 31 and the second driven gear 32. Thereby, the end effector 90 which is connected to the tip end of the second extendable arm 80 having the similar configuration to the first extendable arm 40 rotates the same rotation angle in the opposite direction to the rotation direction of the end effector 90 which is connected to the tip end of the first extendable arm 40, by a similar operation to what is described above.

When both of the end effector 90 which is mounted to the first extendable arm 40 and the end effector 90 which is mounted to the second extendable arm 80 contact opening end portions 401b of the PAR 401, the respective extendable arms 40 and 80 are positionally guided to the opening end portions of the PAR 401 since the grasping units 90b and 90c have V-shapes, and the respective extendable arms 40 and 80 extend so that valley portions of the grasping units 90b and 90c reach the opening end portions 401b of the PAR 401. Subsequently, when the valley portions of the grasping units 90b and 90c reach the opening end portions 401b of the PAR 401, the grasping operation is completed. At this time, a value of an encoder of the first motor or a value of a current that is supplied to the first motor is monitored by the removal satellite 2, and when the respective extendable arms 40 and 80 extend, the value of the encoder increases, whereas the value of the current which is supplied to the motor is small. When extensions of the respective extendable arms 40 and 80 stop by completion of the grasping operation, increase in the value of the encoder stops, or the value of the current which is supplied to the motor increases. Accordingly, when the removal satellite 2 detects change in such encoder value or current value, the removal satellite 2 determines that the removal satellite 2 succeed in grasping.

On the other hand, when one or both of the end effector 90 which is mounted to the first extendable arm 40 and the end effector 90 which is mounted to the second extendable arm 80 does not or do not contact the opening end portion 401b of the PAR 401 even after a fixed time period elapses, grasping fails. In this case, the first extendable arm 40 and the second extendable arm 80 continue to extend, so that increase in the value of the encoder does not stop, or the value of the current which is supplied to the motor remains to be small. Accordingly, when such changes in the encoder value or the current value is detected after a fixed time period elapses, it is determined that grasping fails.

When it is determined that grasping fails, the removal satellite 2 gives an instruction to the control unit 95, and causes the first extendable arm 40 and the second extendable arm 80 to contract. The removal satellite 2 readjusts the position of the robot 1 and redisposes the robot 1 on the opening surface 401a of the PAR 401 by changing the position and the attitude by the propulsive device included by the removal satellite 2, and repeats the above described operation until the removal satellite 2 succeeds in grasping.

Note that the end effector 90 may be rotated so that angles to the longitudinal directions of the respective extendable arms 40 and 80, of the respective end effectors 90 become substantially equal to a taper angle of the PAR 401 by an instruction to the control unit 95 from the removal satellite 2, before the extension operations of the respective extendable arms 40 and 80, or simultaneously with the extension operations. The taper angle of the PAR 401 can be obtained based on data of specifications of the space debris 400 which are stored in advance, analysis on an image of the space debris 400 photographed by the removal satellite 2 and the like. According to such configuration, the end effector and the PAR 401 may be in surface contact instead of point contact, and firmer grasping is enabled.

Next, a case of performing a grasping operation to the nozzle 402 having an inversely tapered cylindrical shape will be described.

First, by an instruction to the control unit 95 from the removal satellite 2, the respective extendable arms 40 and 80 are extended in a same way as described above until the respective extendable arms 40 and 80 become larger than a diameter of the nozzle 402, and the end effectors 90 are rotated so that the angles of the respective end effectors 90 to the longitudinal directions of the respective extendable arms 40 and 80 become substantially equal to a taper angle of the nozzle. The taper angle of the nozzle can be obtained based on the data of specifications of the space debris 400 which are stored in advance, analysis on the image of the space debris 400 photographed by the removal satellite 2 and the like. Note that the extension operation and the rotation operation may be performed in reverse order, or simultaneously. According to such configuration, the end effector and the PAR 401 may be in surface contact instead of point contact, and firmer grasping, and prevention of breakage of the nozzle that is easily broken are enabled.

Subsequently, the removal satellite 2 changes the position and the attitude by the propulsive device included by the removal satellite 2, and thereby the robot 1 which is connected to the removal satellite 2 through the extension spring 3 is positioned to the opening surface 402a of the nozzle 402 which is the grasping target part.

Subsequently, by an instruction to the control unit 95 from the removal satellite 2, the respective extendable arms 40 and 80 are contracted. When both of the end effector 90 which is mounted to the first extendable arm 40 and the end effector 90 which is mounted to the second extendable arm 80 contact side surfaces 402b of the nozzle 402, the respective extendable arms 40 and 80 contract so that the side surfaces 402c of the nozzle 402 are held between respective extendable arm sides of the V-shaped grasping units 90b and 90c and the respective extendable arms 40 and 80, and respective valley portions reach the opening end portions 302b of the nozzle 402. When the valley portions reach the opening end portions 402b of the nozzle 402, the grasping operation is completed. At this time, the value of the encoder of the first motor, or the value of the current that is supplied to the first motor is monitored by the removal satellite 2, or when the respective extendable arms 40 and 80 are contracted, the value of the encoder decreases, or the value of the current which is supplied to the motor is small. When contraction of the respective extendable arms 40 and 80 stops by completion of the grasping operation, decrease in the value of the encoder stops, or the value of the current which is supplied to the motor increases. Accordingly, when the removal satellite 2 detects change in the encoder value or the current value as above, the removal satellite 2 determines that the removal satellite 2 succeeds in grasping.

On the other hand, when one or both of the end effector 90 which is mounted to the first extendable arm 40 and the end effector 90 which is mounted to the second extendable arm 80 does not or do not contact the side surface 402c of the nozzle 402 even after a fixed time period elapses, grasping fails. In this case, the first extendable arm 40 and the second extendable arm 80 continue to contract, so that decrease in the value of the encoder does not stop, or the value of the current which is supplied to the motor remains to be small. Accordingly, when the change in the encoder value or the current value as above is detected after the fixed time period elapses, it is determined that grasping fails.

When it is determined that grasping fails, the removal satellite 2 instructs the control unit 95 and the control unit 95 extends the respective extendable arms 40 and 80. The removal satellite 2 readjusts the position of the robot 1, and redisposes the robot 1 on the opening surface 402a of the nozzle 402 by changing the position and the attitude by the propulsive device included by the removal satellite 2, and the above described operation is repeated until the removal satellite 2 succeeds in grasping.

According to the above described embodiment, the grasping system may be made robust and compact to the positional error and the attitude error of the robot with versatility to grasping targets having different shapes and dimensions of diameters.

In the above described embodiment, explanation is made on the space debris as an example of the grasping target, but the grasping target is not limited to this, and may be any suitable grasping target.

In the above described embodiment, positioning of the robot is performed by the external device of the robot, but, for example, the robot itself may be adapted to include a position/attitude control mechanism and perform positioning, and positioning of the robot may be performed by any suitable device inside or outside of the robot.

In the above described embodiment, the number of extendable arms is two, but the number of extendable arms may be any suitable number of three or more. If the number of extendable arms is increased, the grasping target can be grasped more stably.

In the above described embodiment, the extendable device includes the two extendable arms, but the extendable device may include one extendable arm in which end effectors are mounted to a base end and a tip end. Further, the extendable device may include an extendable arm and an arm of a fixed length. Further, the extendable device may include any suitable extendable mechanism other than the extendable arm.

In the above described embodiment, a number of movable bodies is two, but the number of movable bodies may be any suitable number of three or more.

Concerning the present invention, several embodiments are described for illustration thus far, but the present invention is not limited to the embodiments, and it would be obvious to a person skilled in the art that various modifications and corrections can be made for modes and details without departing from the scope and spirit of the present invention.

### [Explanations of letters or numerals]

- 1: Robot
- 2: Removal satellite
- 3: Extension spring
- 400: Space debris
- 401: PAR
- 420: Nozzle
- 10: Base unit
- 11: Base frame
- 13, 14: Pulley
- 20: First drive unit
- 21: First drive gear
- 22: First driven gear
- 23: First motor pulley
- 24: First drive pulley
- 25: First driven pulley
- 26: First wire
- 27: Second wire
- 30: Second drive unit
- 31: Second drive gear
- 32: Second driven gear
- 33: Second motor pulley
- 34: Second drive pulley
- 35: Fifth wire
- 40: First extendable arm
- 50: First movable body
- 51: First frame
- 54: Base end side pulley
- 55: Base end side pulley support unit
- 56: Tip end side pulley
- 57: Tip end side pulley support unit
- 58: Third wire
- 59: Fourth wire
- 61, 62: Pulley
- 63: Second fixing member
- 70: Second movable body
- 71: Second frame
- 74, 75: Pulley
- 76: Third fixing member
- 80: Second extendable arm
- 90: End effector
- 90b, 90c: Grasping unit
- 90d: Shaft support unit
- 95: Control unit
- 100: Telescoping device
- 1000: Grasping system

## Claims

1. A robot, comprising:
an extendable device capable of extending and contracting in at least one direction;
at least two end effectors that are respectively connected to at least two end portions of the extendable device; and
a control unit capable of causing the extendable device to extend and contract, wherein
each of the at least two end effectors includes at least one grasping unit that extends outward, and
the robot is operable to grasp a target by the at least two end effectors by the control unit causing the extendable device to extend or contract.

2. The robot according to claim 1, wherein
the end effectors are rotatably connected to at least two end portions of the extendable device to bend to a direction in which the extendable device extends and contracts, and
the robot is operable to grasp the target by the at least two end effectors by the control unit causing to extend the extendable device and rotate the end effectors, or to extend the extendable device, rotate the end effectors, and contract the extendable device.

3. The robot according to claim 1 or 2, wherein
the extendable device is capable of extending and contracting in at least two directions, and
includes a first to an n^{th} (n is an integer of two or more) extendable arms that are respectively capable of extending and contracting in a first to an n^{th} directions different from each other.

4. The robot according to claim 3, wherein
the extendable device further includes a first to an n^{th} base units,
each of the first to n^{th} base units includes a first drive unit, and
the first to the n^{th} extendable arms respectively have base end portions connected to the first to the n^{th} base units, and extend and contract along the first to n^{th} directions by power from the first drive unit.

5. The robot according to claim 3 or 4, wherein the first to n^{th} extendable arms respectively include a plurality of movable bodies that advance and retract along an axial direction with them interlocked with each other.

6. The robot according to any one of claims 1 to 5, wherein
the end effector is rotatable with respect to the extendable arms by power from a second drive unit provided at the base units.

7. The robot according to claim 5 or 6, wherein
at least one of the plurality of movable bodies includes
a frame,
a base end side pulley that is rotatably provided at the frame, and rotates by the frame moving,
a tip end side pulley that is rotatably provided at the frame, and
a first transmission member that is provided in a tense state between the base end side pulley and the tip end side pulley, and transmits rotation of the base end side pulley to the tip end side pulley, wherein
the first transmission member is fixed to a movable body adjacent to a tip end side.

8. The robot according to claim 7, wherein
each of the base units includes a base frame,
the first drive unit includes
a first motor,
a first motor pulley that is directly connected to a rotation shaft of the first motor, and rotatably provided at the base frame of the base unit,
a first driven pulley that is rotatably provided at the base frame, and
a second transmission member that is provided in a tension state between the first motor pulley and the first driven pulley, and transmits rotation of the first motor to the first driven pulley,
the second transmission member being fixed to the movable body adjacent to a tip end side.

9. The robot according to claim 8, wherein the first transmission member includes a third wire in which one end of the third wire is wound on the base end side pulley, and the other end of the third wire is wound on the tip end side pulley respectively from a first side, and a fourth wire in which one end of the fourth wire is wound on the base end side pulley, and the other end of the fourth wire is wound on the tip end side pulley respectively from a second side.

10. The robot according to any one of claims 2 to 9, wherein
the end effector is connected to the second drive unit by a second transmission member through pulleys that are provided on at least one of the base units and the plurality of movable bodies, and
the second transmission member is laid on an opposite side to the end effector, of at least one of the pulleys provided on at least one of the base units and the plurality of movable bodies, and a length of the second transmission member is configured to be constant regardless of an extension or contraction state of the first to the n^{th} extendable arms.

11. A grasping system, comprising:
the robot according to any one of claims 1 to 10; and
a grasping control device that positions the robot to a grasping target part included by a grasping target, and instructs extension or contraction of the extendable device to the control unit so as to grasp the grasping target part.

12. The grasping system according to claim 11, wherein the grasping control device instructs extension of the extendable device and rotation of the end effector to the control unit.

13. The grasping system according to claim 11, wherein the grasping control device instructs extension of the extendable device, rotation of the end effector, and contraction of the extendable device to the control unit.

14. The grasping system according to any one of claims 11 to 13, wherein the grasping control device determines whether or not the grasping system succeeds in grasping the grasping target, and when it is determined that the grasping system does not succeed in grasping of the grasping target, the grasping control device contracts or extends the extendable device in accordance with a shape of the grasping target part.

15. The grasping system according to any one of claims 11 to 14, wherein a shape of the grasping target part is a tapered cylindrical shape or an inversely tapered cylindrical shape.

16. The grasping system according to any one of claims 11 to 15, wherein the grasping target is a space debris, and the grasping target part is a PAR or a nozzle.
